# EUROPÄISCHE PATENTSCHRIFT

(11) **EP 2 168 716 B1**
(45) Veröffentlichungstag und Bekanntmachung des Hinweises auf die Patenterteilung: **09.03.2011**
(21) Anmeldenummer: 08105429.8
(22) Anmeldetag: 25.09.2008
(51) Int. Cl.: B23Q 11/08, F16P 3/00

(54) **Tür für Werkzeugmaschinen**
Door for tool machines
Porte pour machines-outils

(43) Veröffentlichungstag der Anmeldung: 31.03.2010
(73) Patentinhaber: Mikron Agie Charmilles AG, 2560 Nidau (CH)
(72) Erfinder: Condrau, Alexandre, 2710 Tavannes (CH)
(74) Vertreter: De Colle, Piergiacomo

(56) Entgegenhaltungen:
- EP-A- 1 754 568
- DE-U1-202007 018 592
- US-A- 4 999 895
- US-A1- 2007 068 080

## Beschreibung

Die Erfindung betrifft eine Werkzeugmaschine gemäß dem Oberbegriff des Anspruchs 1.

Werkzeugmaschinen, insbesondere Fräs- oder Bohrmaschinen enthalten in der Regel einen Werkzeugtisch, auf dem ein zu bearbeitendes Werkstück einspannbar ist. Vor diesem Werkzeugtisch ist üblicherweise ein dreidimensional verschiebbares Werkzeug, beispielsweise ein Spindelstock mit einem Fräswerkzeug, angeordnet. Der Werkzeugtisch und die Werkzeugeinrichtung sind von einem geschlossenen Gehäuse umgeben, um die Umgebung vor umfliegenden Spänen und Kühlmittelspritzern zu schützen. Es wird somit ein Arbeitsraum gebildet. Um zu dem Arbeitsraum einen Zugang zum Werkzeug - oder Werkstückwechsel zu erhalten, ist in der Frontseite des Gehäuses eine Tür vorgesehen. Diese Türen bestehen bekanntermassen aus einer oder zwei Schiebetüren, wobei in den Schiebetüren Fenster zur Beobachtung des zu bearbeitenden Werkstückes eingesetzt sind.

Eine solche Tür ist in der DE 101 01 675 A1 beschrieben. Diese Werkzeugmaschine weist unter Anderem zwei gleich breite Schiebetürhälften mit jeweils einer Glasscheibe auf.

Der damit verbundene Nachteil liegt darin, dass die mittleren Seiten der gleich breiten Türhälften Griffe enthaltende Stege aufweisen, die im geschlossenen Zustand die direkte Sicht auf das Werkstück mit dem Werkzeug und im Hinblick auf den Arbeitsprozess verhindert.

Eine andere bekannte Ausführungsform besteht darin, die Tür einstückig zu gestalten, welches aufgrund der damit verbundenen grösseren Breite bei der geöffneten Stellung ein hinderliches seitliches Überstehen bedingt und beispielsweise das seitliche Anbringen eines Peripheriegerätes verbietet.

In der EP 1 754 568 A1 wird eine Werkzeugmaschine beschrieben, bei der die vordere Tür in zwei gleich breite Türhälften geteilt ist und zur Vergrösserung des Arbeits- und Beladebereichs nach oben, holmenfrei ausgebildet ist.

Die Nachteile dieser Bauform entsprechen denen der zuvor erwähnten deutschen Patentschrift.

Die US 4 999 895 offenbart eine Aussenfrontabdeckung einer Werkzeugmaschine. Die Abdeckung weist eine Schiebetüren verschliessbare schmale Öffnung auf, die es ermöglicht, die Werkstücke geöffneten Türen hindurchzuschieben und schützt die Umgebung bei geschlossenen Türen vor umher fliegenden Spänen und Kühlmittelspritzern. Oberhalb der schmalen Öffnung befinden sich zwei weitere Türen, die den Zugang zum Werkzeug bei einem Werkzeugwechsel erleichtern.

Nachteilig an dieser Ausführungsform der Abdeckung ist jedoch die fehlende Möglichkeit das Werkstück während seiner Bearbeitung zu beobachten.

Ausgehend von diesem Stand der Technik liegt die erfindungsgemässe Aufgabe darin, eine Gehäusetür einer Werkzeugmaschine zu schaffen, die eine ungehinderte Sicht innerhalb des mittleren Bereichs des Arbeitsraumes zulässt und somit die sichere Bearbeitung eines Werkstückes durch den Operator in optimaler Weise gestattet.

Die Lösung der Aufgabe wird erfindungsgemäss dadurch gelöst, dass die Tür eine asymmetrische Bauweise aufweist, wobei die eine Schiebetür breiter ist als die andere Schiebetür und in der breiteren Schiebetür ein Fenster angeordnet ist, wobei der Fensterbereich über die Mitte des Arbeitsraumes reicht.

Aufgrund der grösseren Breite der einen Türhälfte, die als Schiebetür ausgebildet sein kann, ist es in einfacher Weise gelungen, eine freie Sicht auf den Bearbeitungsprozess zu schaffen und somit einen unverzerrten Eindruck von dem Arbeitsvorgang der Werkzeugmaschine zu erhalten. Somit ist eine höhere Arbeitssicherheit gewährleistet.

Weitere Ausgestaltungen der Erfindung sind aus den Merkmalen der Unteransprüche zu entnehmen und werden bei der Beschreibung des Ausführungsbeispiels näher erläutert.

Die erfindungsgemässe Werkzeugmaschine ist beispielhaft in den Zeichnungen dargestellt. Es zeigen:
- Fig.1: die Frontansicht und Draufsicht der Tür in geschlossener Stellung
- Fig.2: die Frontansicht und Draufsicht der Tür in halboffener Stellung
- Fig.3: die Frontansicht und Draufsicht der Tür in offener Stellung
- Fig. 4: die Frontansicht der Werkzeugmaschine in drei Türstellungen

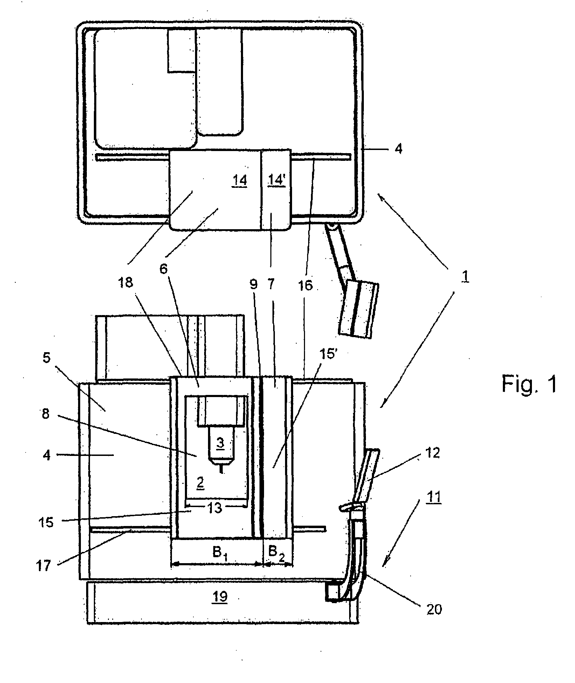

Die Fig. 1 zeigt das Werkzeugmaschinenkonzept in Front- und Draufsicht mit der Frontseite 5. Die Werkzeugmaschine 1 weist ein Gehäuse 4 auf, welches den Arbeitsraum 2 schützend umgibt. Im Arbeitsraum 2 befinden sich das Werkzeug 3 und der nicht dargestellte Werktisch mit dem Werkstück, weiches sich bekanntermassen unterhalb des Werkzeuges 3 befindet. In diesem Ausführungsbeispiel wird die Tür aus zwei Schiebetüren 6 und 7 gebildet. Die Schiebetürhälften 6 und 7 sind winkelförmig ausgestaltet mit einem oberen horizontalen 14, 14' und einem nach unten weisenden vertikalen 15, 15' Bereich. Mittels der Schienen 16 und 17 werden die Türhälften 6, 7 horizontal 16 bzw. vertikal 17 geführt. Wesentlich ist die Tatsache, dass die Breiten B₁ und B₂ der Türhälften unterschiedlich sind. Die Breite B₁ ist so gewählt, dass sie den gesamten Mittenbereich, in dem die Bearbeitung des Werkstückes erfolgt, überdeckt. Es wird somit ermöglicht, in diese breitere Tür 6 ein Fenster 8 anzuordnen, um eine hinderungsfreie Sicht auf das Werkstück und das Werkzeug 3 während der Bearbeitung zu gewähren. Beide Türhälften 6, 7 sind durch Dichtungsmittel 9 angebracht, beispielsweise durch ein mechanisches "Labyrinth". Weiterhin ist auf der rechten Seite 11 des Maschinensockels 19 ein schwenkbarer Arm 20 für den manuell bedienbaren Steuerpult 12 angebracht. In dieser Fig. 1 sind die Türen 6, 7 geschlossen. Der Fensterbereich 13 erstreckt sich über den ganzen Arbeitsbereich im Arbeitsraum 2. Im Stand der Technik wird dieser Bereich durch die Türkanten hinderlich verdeckt.

Die Türführungen sind in bekannter Weise gegen herumfliegende Späne oder Kühlwasserspritzer geschützt, beispielsweise durch schräg die Führungen überdeckende Bleche.

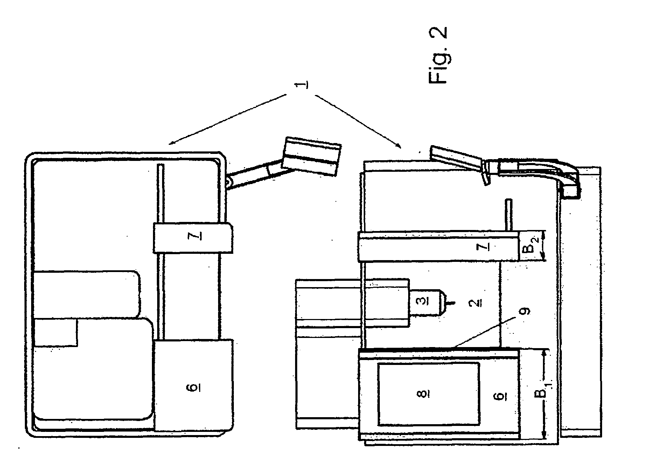

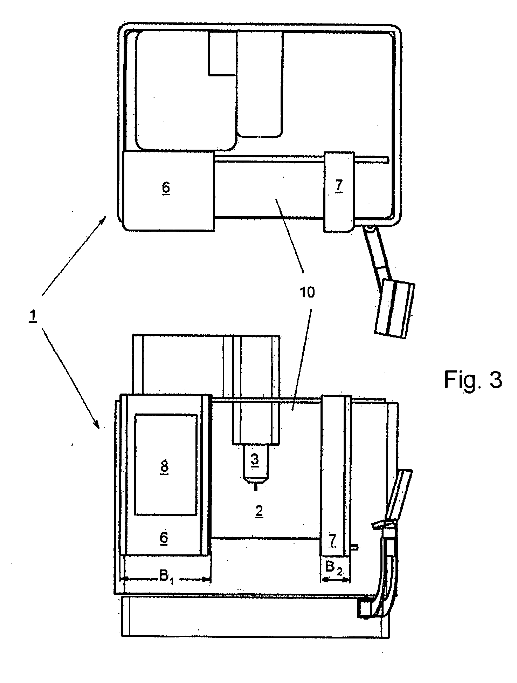

Die Türhälften 6, 7 können unabhängig voneinander jeweils für sich allein oder beide gleichzeitig geöffnet oder geschlossen werden. Analog zu Fig. 1 zeigen die Fig. 2 die halboffene (hier ist nur die breitere Türhälfte 6 geöffnet) und Fig. 3 die komplett geöffnete Stellung. Der durch die geöffneten Türen gebildete offene Bereich ist so ausgestaltet, dass der obere Bereich 10 zum Bestücken des Arbeitsraumes 2 mit grossen Werkstücken frei zugänglich ist.

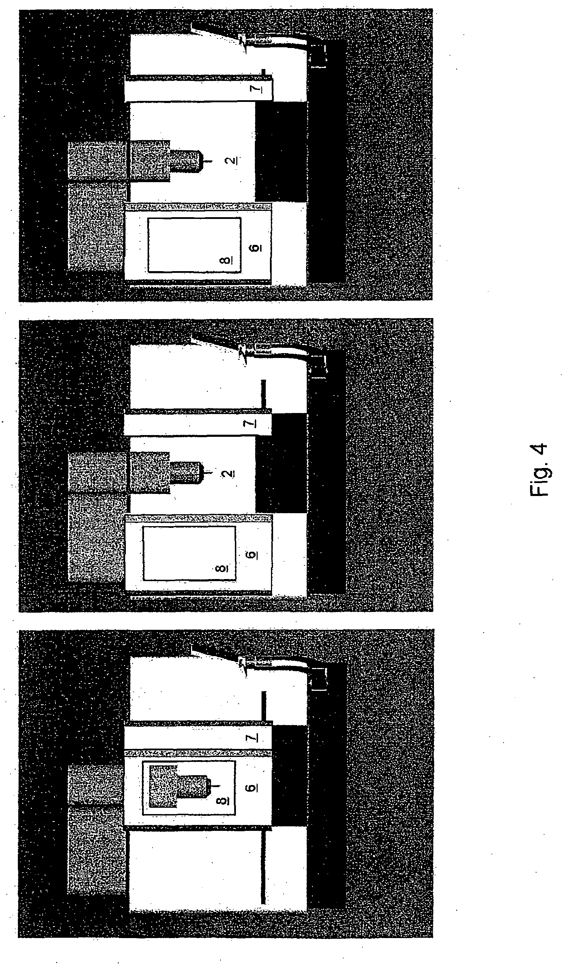

Zusammenfassend zeigt die Fig. 4 die Türstellungen: geschlossen, halb offen (die breitere Tür 6 ist geöffnet) und ganz geöffnet.

Die mit dieser Erfindung verbundenen Vorteile liegen insbesondere darin, dass im Gegensatz zum Stand der Technik bezogen auf ebene Türen die Sicht auf das zu bearbeitende Werkstück hinderungsfrei erfolgt.

### Bezugszeichenliste:

- 1: Werkzeugmaschine
- 2: Arbeitsraum
- 3: Werkzeug
- 4: Gehäuse
- 5: Frontseite
- 6: Breitere Schiebetür
- 7: Schmalere Schiebetür
- 8: Fenster
- 9: Dichtungsmittel
- 10: Oberer Bereich
- 11: Seite
- 12: Pult
- 13: Fensterbereich
- 14: Horizontaler Bereich von 6
- 15: Vertikaler Bereich von 6
- 16: Horizontale Schiene
- 17: Vertikale Schiene
- 18: Obere Seite
- 19: Maschinensockel
- 20: Schwenkbarer Arm

- B₁: Breite von 6
- B₂: Breite von 7

- 14': Horizontaler Bereich von 7
- 15': Vertikaler Bereich von 7

## Patentansprüche

1. Werkzeugmaschine (1) mit einem in einem Arbeitsraum (2) mittig angeordneten Werkzeug (3), einem den Arbeitsraum (2) umschliessenden Gehäuse (4), welches an der Frontseite (5) mittels einer Tür (6, 7) verschliessbar ist, wobei die Tür (6, 7) zwei Schiebetüren (6, 7) aufweist die nebeneinander angeordnet sind, **dadurch gekennzeichnet, dass** die eine Schiebetür (6) breiter ist als die andere Schiebetür (7) und in der breiteren Schiebetür (6) ein Fenster (8) angeordnet ist, wobei der Fensterbereich (13) über die Mitte des Arbeitsraumes (2) reicht.

2. Werkzeugmaschine (1) nach Anspruch 1, **dadurch gekennzeichnet, dass** das in der breiteren Tür (6) angeordnete Fenster (8) bei geschlossenem Zustand genau vor dem Werkzeug (3) zur besseren Einsicht angeordnet ist.

3. Werkzeugmaschine (1) nach Anspruch 1 oder 2, **dadurch gekennzeichnet, dass** bei geschlossener Tür (6, 7) die beiden unterschiedlich breiten Schiebetüren (6, 7) Dichtungsmittel (9) aufweisen.

4. Werkzeugmaschine (1) nach Anspruch 1, 2 oder 3, **dadurch gekennzeichnet, dass** der obere Bereich (10) des Arbeitsraumes bei geöffneter Tür (6, 7) nach oben frei zugänglich ist.

5. Werkzeugmaschine (1) nach einem der vorherigen Ansprüche, **dadurch gekennzeichnet, dass** beide Schiebetüren (6, 7) unabhängig voneinander verschliessbar sind.

6. Werkzeugmaschine nach einem der vorherigen Ansprüche, **dadurch gekennzeichnet, dass** auf der Gehäuseseite (11) der schmaleren Schiebetür (7) ein schwenkbarer Pult (12) für die manuelle Steuerung der Werkzeugmaschine (1) angeordnet ist.

## Claims

1. Machine tool (1) comprising a tool (3) arranged centrally in a work space (2) and a housing (4) which encloses the work space (2) and which can be closed on the front side (5) by means of a door (6, 7), wherein the door (6, 7) has two sliding doors (6, 7) which are arranged next to one another, **characterized in that** the one sliding door (6) is wider than the other sliding door (7) and a window (8) is arranged in the wider sliding door (6), wherein the window region (13) extends across the centre of the work space (2).

2. Machine tool (1) according to Claim 1, **characterized in that** the window (8) arranged in the wider door (6) is arranged exactly in front of the tool (3) in the closed state for better viewing.

3. Machine tool (1) according to Claim 1 or 2, **characterized in that** the two sliding doors (6, 7) of different width have sealing means (9) when door (6, 7) is closed.

4. Machine tool (1) according to Claim 1, 2 or 3, **characterized in that** the upper region (10) of the work space is freely accessible at the top when door (6, 7) is open.

5. Machine tool (1) according to one of the preceding claims, **characterized in that** both sliding doors (6, 7) can be closed independently of one another.

6. Machine tool according to one of the preceding claims, **characterized in that** a swivelling console (12) for the manual control of the machine tool (1) is arranged on the housing side (11) of the narrower sliding door (7).

## Revendications

1. Machine-outil (1) comprenant un outil (3) disposé centralement dans un espace de travail (2), un boîtier (4) entourant l'espace de travail (2), qui peut être fermé au niveau du côté frontal (5) au moyen d'une porte (6, 7), la porte (6, 7) présentant deux portes coulissantes (6, 7) qui sont disposées l'une à côté de l'autre, **caractérisée en ce que** l'une des portes coulissantes (6) est plus large que l'autre porte coulissante (7) et une fenêtre (8) est pratiquée dans la porte coulissante plus large (6), la région de la fenêtre (13) s'étendant sur le centre de l'espace de travail (2).

2. Machine-outil (1) selon la revendication 1, **caractérisée en ce que** la fenêtre (8) pratiquée dans la porte plus large (6) est disposée exactement devant l'outil (3), dans l'état fermé, pour une meilleur observation.

3. Machine-outil (1) selon la revendication 1 ou 2, **caractérisée en ce que**, lorsque la porte (6, 7) est fermée, les deux portes coulissantes (6, 7) de largeur différente présentent des moyens d'étanchéité (9).

4. Machine-outil (1) selon la revendication 1, 2 ou 3, **caractérisée en ce que** la région supérieure (10) de l'espace de travail est librement accessible vers le haut lorsque la porte (6, 7) est ouverte.

5. Machine-outil (1) selon l'une quelconque des revendications précédentes, **caractérisée en ce que** les deux portes coulissantes (6, 7) peuvent être fermées indépendamment l'une de l'autre.

6. Machine-outil selon l'une quelconque des revendications précédentes, **caractérisée en ce qu'**un pupitre pivotant (12) pour la commande manuelle de la machine-outil (1) est disposé sur le côté du boîtier (11) de la porte coulissante la plus étroite (7).
